# EUROPEAN PATENT APPLICATION

(11) **EP 1 112 690 A2**
(43) Date of publication of application: **04.07.2001**
(21) Application number: 00124235.3
(22) Date of filing: 10.11.2000
(51) Int. Cl.: A21C 11/10

(54) **Method and apparatus for producing small dough rolls for obtaining baguettes**

(30) Priority: 20.12.1999 IT VR990107
(71) Applicant: Doge Food Processing Machinery S.r.l., 36015 Schio (Vicenza) (IT)
(72) Inventor: Zaltron, Gian Pietro, 36015 Schio (Vicenza) (IT)
(74) Representative: Modiano, Guido, Dr.-Ing.

(57) **Abstract**

A method of producing dough rolls with tapering ends for obtaining baguettes starting from at least one roll of unbaked dough supported by at least one support and having a surface skin, the method comprising a sequential differentiated compression on one roll separation region at a time to delimit at least one smaller roll by means of at least one pinching tool having a working surface directed towards, and acting against, said support so as to obtain, in use, a desired compression distribution to cause the skin in contact with the or each tool of the or each roll and the skin of its respective smaller roll being formed gradually to get close, without tearing, to the skin in contact with its respective support, until said skin in contact with the tool is at least partly joined to the skin that is in contact with its respective support, both being then cut apart.

An apparatus for producing dough rolls comprising a support (2) for a dough roll (3) or sheet (4) having a surface layer or skin and a pinching tool (15) designed to divide the roll (3) or sheet (4) into two smaller rolls (14) and having a working surface which is directed towards, and acts against, the support (2). The working surface of the tool (15) is so shaped as to apply, in use, a differential compression in sequential steps on the roll (3) until the skin in contact with the tool (15) is joined to the skin in contact with the support (2) to be eventually cut away.

## Description

The present invention relates to a method and an apparatus for producing small long dough loaves with tapering ends for obtaining baguettes.

At present, baguettes are prepared starting from continuous rolls of raw dough which are then cut into shorter lengths or loaves designed to become baguettes once baked.

Cutting of the rolls into smaller rolls is usually performed manually by using conventional knives. In industrial production of baguettes, however, use is made of suitable machines for shaping and cutting rolls of unbaked dough into loaves equal in shape and length. Such machines are usually constituted by a sliding support on which rolls of unbaked dough are arranged to be conveyed close to suitable blades with a cutting motion in a transverse direction to the roll feed direction, thereby automatically cutting said rolls.

The methods used so far to cut unbaked dough rolls, however, are only suitable for the production of loaves having truncated or at the most rounded ends.

At present, the only way to obtain rolls with tapering ends for obtaining baguettes is to cut the starting roll according to one of the above mentioned methods and then manually shape the ends of the loaves so as to obtain the intended pointed shape.

A drawback of the current methods for obtaining baguettes with tapering ends is that it has to be performed either manually, i.e. mostly by trained personnel, who must be able to restore continuity in the surface layer or skin at the ends of each loaf, said continuity being generally cut off by the cutting edge of the blades, and to obtain the intended pointed shape.

Another drawback of the current method for obtaining baguettes with tapering ends is that by being performed substantially by hand, it inevitably requires long execution times and rather higher production costs. The mainly manual kind of processing therefore limits the production of baguettes to small numbers per unit time and is not suitable for large-scale industrial production.

Another drawback of the current method for obtaining baguettes with tapering ends concerns the final shape of the product in that by being a mainly manual process it is in fact difficult to produce a large number of loaves having the same shape and dimensions.

The main object of the present invention is to provide a method of producing dough rolls with tapering ends for obtaining baguettes directly by automatically separating unbaked dough rolls without requiring further subsequent manual treatments.

Another object of the present invention is to provide a method of forming dough rolls with tapering ends for obtaining baguettes without requiring trained labor, thereby allowing hourly productivity of said product to be increased.

A further object of the present invention is to provide an apparatus which makes it possible to produce, on an industrial scale, dough rolls with tapering ends for obtaining baguettes, in such a way the integrity of the outermost layer or skin of the rolls is preserved while the same are cut away.

According to a first aspect of the present invention, there is provided a method of producing dough rolls with tapering ends for obtaining baguettes starting from at least one roll or sheet of unbaked dough carried by at least one support and having a surface layer or skin, said method comprising sequential differentiated compression at at least one roll separation region at a time to delimit at least one shorter roll by means of at least one pinching tool having an active surface directed towards, and acting against, said support thereby obtaining, in use, a desired compression distribution to cause the skin, in contact with said tool, of the or each roll and the skin of its respective smaller roll being formed gradually to get close, without tearing, to the skin in contact with its respective support, until said skin in contact with said tool is at least partly joined to said skin in contact with its respective support to be eventually cut away from one another.

Advantageously, said differentiated compression applied in sequential steps to each dough roll or sheet is applied transversely to its respective longitudinal axis.

According to another aspect of the present invention, there is provided an apparatus for performing the above method, which comprises at least one support for at least one dough roll or sheet having a surface layer or skin and at least one pinching tool which is designed to divide the or each roll or sheet into at least one smaller roll, and a working surface which is directed towards, and acts against, its respective support, characterized in that said working surface of each tool is so shaped as to apply, in use, a differentiated compression in sequential steps on the or each roll, thereby moving gradually and with no tearing, any skin in contact with the or each tool of the or each roll or sheet and of its respective smaller roll being formed toward the skin in contact with its respective support, until said skin in contact with the or each tool is at least partly joined to said skin in contact with its respective support to be eventually cut away from one another.

Advantageously, the or each support is slideably mounted in a longitudinal feed direction and the or each pinching tool reciprocates in a compression direction transverse with respect to said feed direction.

Advantageously, said active surface of the or each pinching tool comprises compression surfaces suitable for gradually moving without tearing the skin portion of the or each dough roll in contact with the or each tool towards the skin portion in contact with its respective support, and a cutting front which is designed to join said skin portion in contact with the or each tool to said skin portion in contact with its respective support and then to cut said joined skin portions.

Further aspects and advantages of the present invention will become better apparent from the following detailed description of some currently preferred embodiment thereof, given by way of non-limitative example with reference to the accompanying drawings, wherein:
Figure 1 is a plan view of an apparatus for producing shorter rolls with tapering ends for obtaining baguettes;
Figure 2 is a plan view of another embodiment of the apparatus of Figure 1;
Figure 3 is a plan view of another embodiment of the apparatus of Figure 1;
Figure 4 is a plan view of a pinching tool which can be used in the apparatus of Figure 1;
Figure 5 is an enlarged-scale cross-sectional view of the pinching tool, taken along the line V-V of Figure 4;
Figure 6 is a plan view of the working surface of the pinching tool that can be adopted in the apparatus of Figure 1;
Figure 7 is a plan view of another type of pinching tool which can be adopted in the apparatus of Figure 2;
Figure 8 is a cross-sectional view of the tool, taken along the line VIII-VIII of Figure 7;
Figure 9 is a cross-sectional view of the pinching tool, taken along the line IX-IX of Figure 7; and
Figure 10 is a plan view of an S-shaped pinching tool which can be adopted in the apparatus of Figure 3.

In the accompanying drawings, similar parts or components have been designated by the same reference numerals.

With reference to the above Figures, an apparatus according to the present invention is designated by the reference numeral 1 and comprises a support 2 which can slide in a direction F₁, i.e. the feed direction, and conveys a roll of dough 3 or a sheet of dough 4 through the provided processing stations.

Both the roll 3 and the sheet 4 have a prevailingly longitudinal dimension and can be arranged on the support 2 parallel to the feed direction X.

The support 2 can be advantageously divided into multiple portions, e.g. a first portion 5 and a second portion 6, so as to serve independently and sequentially any provided processing station, with the possibility of varying the feed rate depending upon the requirements of the processing cycle.

The portions 5 and 6 of the support 2 can also be mutually spaced by a gap 7 through which any waste 8 produced during a previous treatment of the roll 3 or sheet 4 can fall.

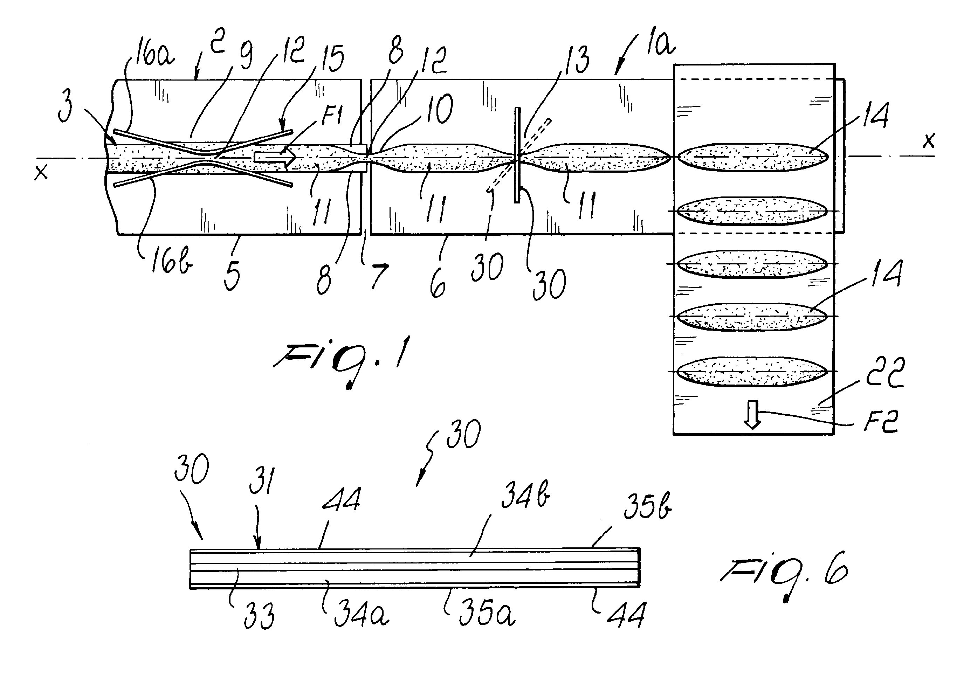

In the apparatus 1a of Figure 1, in order to process the roll 3 there is provided a first processing station 9, at which a sequence of narrowings 10 are delimited on both sides of the roll 3 at constant length intervals, so as to form a sequence of lengths 11 joined to one another by thinner portions of dough or tabs 12, and a second processing station 13, at which the lengths 11 are separated by cutting the tabs 12 to obtain a series of loaves 14 having the intended shape.

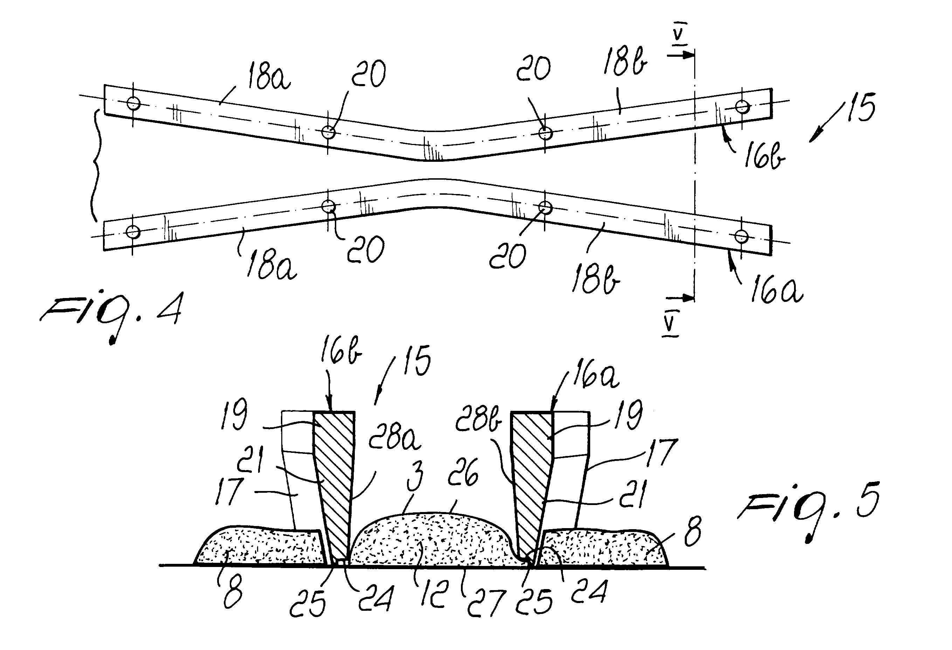

In the processing station 9, the narrowing 10 is produced by means of a pinching tool 15 comprising two ribs 16a and 16b having substantially the same shape and being arranged on opposite sides and in a mirror-symmetrical way with respect to the axis x-x of the roll 3. As shown more clearly in Figures 4 and 5, the ribs 16a and 16b of the pinching tool 15 are curved transversely to their length at the centerline, so as to form two portions 18a and 18b respectively, which are at a mutual angle Y one with respect to the other and have vertices which are aligned transversely and preferably at right angles, to the axis x-x.

As shown more clearly in Figure 5, each rib 16a and 16b has an upper portion 19 having a constant width and formed with threaded holes 20 to allow ribs 16a and 16b to be mounted on a machine (not shown in the drawings) of any suitable type, and a lower tapering portion 21 having a front active surface at its downward region.

The front active surface is so shaped as to provide, in use, a differentiated compression on the dough roll 3 at predetermined separation regions 23, thus making it possible to separate the waste 8 from the roll 3 and locate the lateral narrowings 10.

The front active surface, which is identical in both ribs 16a and 16b, preferably comprises a compression surface 24, which is substantially flat and parallel to the portion 5 of the support 2 against which it acts and is designed to compress the dough in the area proximate to the cutting region, and a cutting front 25 which is arranged laterally to the compression surface 24 and protrudes from it to such an extent as to join, in use, the upper surface layer or top skin 26 to the bottom skin 27 of the roll 3 and to cut said layers once skin junction has occurred. As shown in Figure 5, the cutting front 25 is arranged on the outer edge of the front active surface, since in this case joining of the skin 26 to the skin 27 before final cutting is required only on the inner side of the two ribs 16a and 16b. While the separation regions 23 are compressed together the dough is gradually pinched by the active surfaces of the ribs 16a and 16b, which results in the roll 3 being narrowed. The compression surfaces 24, which are located in the inner part of the front active surfaces of the ribs 16a and 16b, are designed to pinch the dough that lies proximate to the cutting region, so as to move the skin layers 26 and 27 towards each other without tearing them.

The cutting front 25 instead forms together with the outer side 17 of the ribs 16a and 16b a sharp edge which tends to separate the waste 8 from the dough tab 12 formed by the tool 15 in a normal cutting operation, since in that case integrity of the top skin 26 of the waste 8 is not an important factor.

In order to avoid tearing, during compression, the top skin 26 of the dough tab 12, the compression surfaces 24 can be radiused to the internal sides 28a and 28b of the ribs 16a and 16b through a chamfer 29, which can comprise an inclined surface, as in Figure 5, or can take a rounded shape for better results.

Once the narrowing 10 has been produced by the pinching tool 15, the roll 3 is caused to advance in the direction F₁ from portion 5 to portion 6 of the support 2. While crossing the gap 7, any waste 8 produced during the preceding operation for narrowing the roll 3 finally separates and falls below by gravity, thereby freeing the region of the narrowing 10 and exposing the sequence of dough lengths 11 joined by the tabs 12.

The apparatus 1a of Figure 1 separates then the dough segments 11 by a second differentiated compression operation, which requires a second tool 30 as shown in Figure 6. Since it is necessary to ensure continuity of the top skin 26 of the roll 3 on both sides of the separation region 23, the tool 30 comprises a single rib 31, which can be straight and have a transverse cross-section of constant width, and an active front surface which delimits on the centerline a longitudinal cutting front 33 which is laterally flanked by compression surfaces 34a and 34b. By being so shaped, the front active surface of the tool 30 allows two adjacent portions of dough 11 initially joined by a tab 12 to be separated, giving their ends a pointed shape by means of the prior narrowing 10 and ensuring uniformity in the top skin 26, which is joined on both sides of the rib 31 and is cut, immediately thereafter, by the longitudinal cutting front 33 at a region between the two joined fronts.

In the tool 30 of Figure 6 also the compression surfaces 34a and 34b can be radiused through a chamfer 44 to, this time, the outer sides 35a and 35b, of the rib 31 to allow a more uniform distribution of the pressures during compression, thereby avoiding tearing the skin 26 of the roll 3.

As shown in Figure 1, the apparatus 1a preferably comprises a third portion 22 of the support 2 which is arranged downstream of the processing station 13 and can slide in a direction F₂ which extend transversely to the feed direction F₁. The stick loaves 14 coming from the portion 6 of the support 2 are then deposited and arranged onto the portion 22 transversely to the advancement direction F₂ to be conveyed to the baking oven.

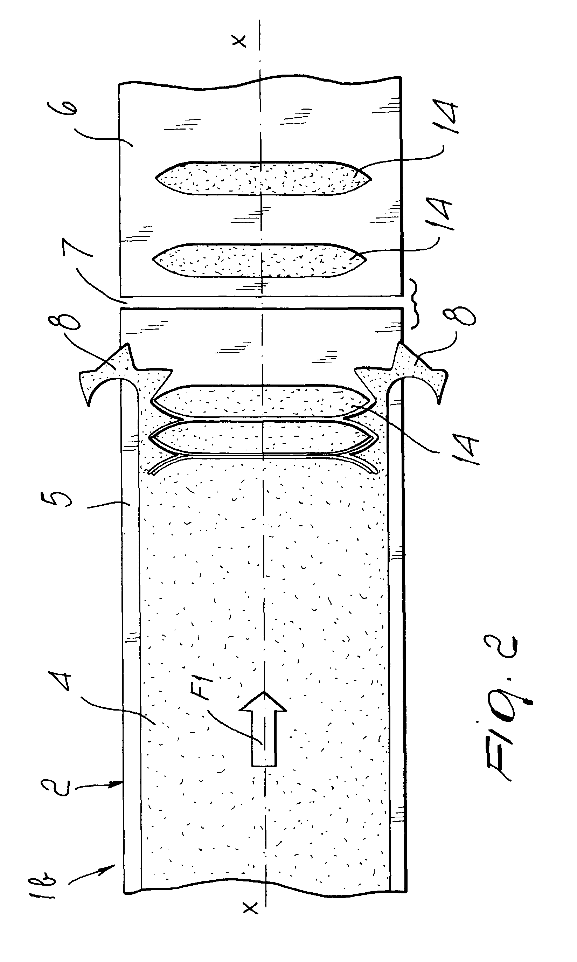

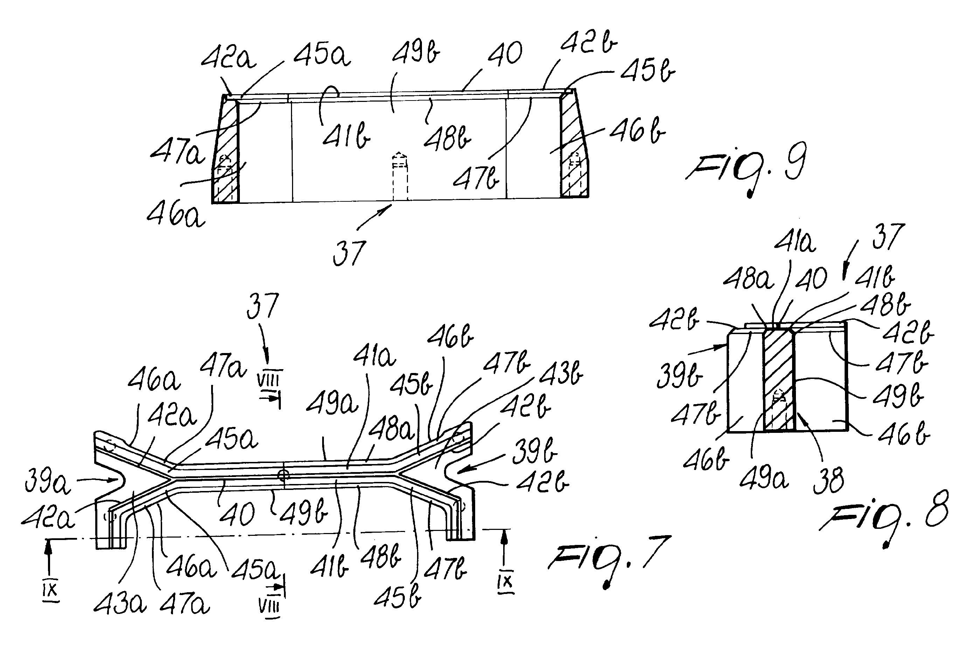

The apparatus 1b of Figure 2, unlike that of Figure 1, produces a series of loaves 14 with pointed ends by applying a single differentiated compression on a dough sheet 4. This is made possible by the specific shape of the tool 37, shown more clearly in Figure 7, which comprises an intermediate rib 38 and two lateral ribs 39a and 39b which are V-shaped and are joined to the longitudinal ends of the intermediate rib 38 at their vertex.

As shown in Figure 8, the intermediate rib 38 has a transverse cross-section of constant width, an active surface provided with a longitudinal cutting front 40 arranged on the centerline and two compression surfaces 41a and 41b which are arranged on opposite sides with respect to said front. The lateral ribs 39a and 39b, instead, designed to separate the waste 8 from the sheet 4, have respective fronts 42a and 42b which are adjacent to the sides 43a and 43b respectively, of the tool 37 which is designed to interact with the waste dough 8.

As shown in Figure 9, the compression surfaces 45a and 45b at the lateral ribs 39a and 39b are thus arranged at the side of the cutting front 42a and 42b respectively, and laterally to the sides 46a and 46b of the tool 37 to which they are radiused through a respective chamfer 47a and 47b.

Also, in the intermediate rib 38 the compression surfaces 41a and 41b are radiused through a respective chamfer 48a and 48b to the sides 49a and 49b of the tool 37.

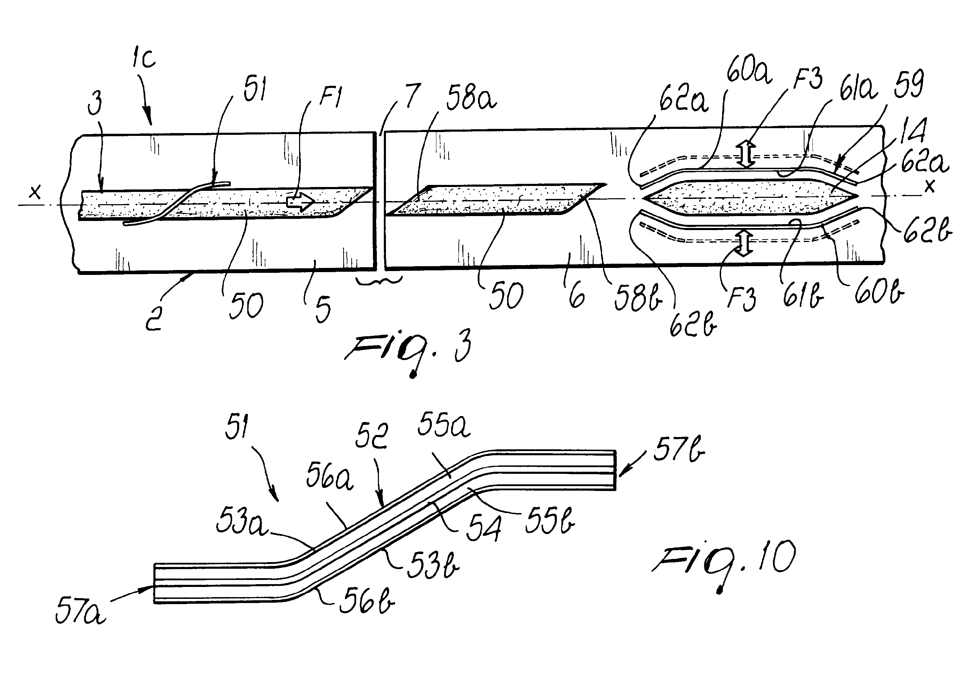

Finally, Figure 3 shows an apparatus 1c designed to carrying out two sequential operations, the first of which consists in a differentiated compression being applied to the roll 3 to divide it into shorter units 50 whose ends are pointed but not axially aligned with the axis x-x, while the second one is a molding operation for each unit 50, so as to align their respective pointed ends with the longitudinal axis x-x.

In order to provide differentiated compression in the apparatus 1c of Figure 3 it is possible to adopt a substantially S-shaped tool 51. The tool 51 in fact comprises an intermediate rib 52 which is inclined, in use, with respect to the axis x-x of the roll 3 and has an active surface having a longitudinal cutting front 54 arranged on the centerline and laterally delimiting two compression surfaces 55a and 55b which are radiused to the sides 56a and 56b respectively, of the tool 51 through a respective chamfer 53a and 53b. Two extensions 57a and 57b are joined to the ends of the intermediate rib 52, extend substantially parallel to the axis x-x of the roll 3 and are spaced from one another so that they do not interact, in use, with the roll 3. The tool 51 thus divides the roll 3 into units 50 which have asymmetrical ends 58a and 58b with respect to the axis x-x. The alignment of the ends 58a and 58b with respect to the axis x-x is provided by a mold 59 which is arranged downstream of the tool 51 and at the portion 6 of the support 2.

The mold 59 comprises two shaping domes 60a and 60b which are concave with respect to the longitudinal axis x-x and can move along a transverse axis, preferably a right-angle axis, with respect to said axis x-x so as to move mutually closer and further apart in the directions F₃ indicated by double arrows in Figure 3, so as to deform each segment 50 and axially align the ends 58a and 58b with the axis x-x. The domes 60a and 60b have a respective internal active surface 61a and 61b which is shaped complementarily to the final shape of a stick loaf with tapering ends 14.

The edges 62a and 62b of the domes 60a and 60b fit together when the domes approach to one another, whereby no dough flows out and is thus lost during the molding of each portion 50. Owing to the domes 60a and 60b being shaped as shown in Figure 3, processing of the ends 58a and 58b of each portion 50 in order to give them a pointed shape aligned with the axis x-x is a quick operation and can produce above all a series of stick loaves 14 all having the same shape and dimensions.

The method and the apparatus described above are susceptible of numerous modifications and variations within the scope defined by the appended claims.

For instance, the system 1a of Figure 1, instead of a pair of ribs 16a and 16b designed to apply a differentiated compression to the roll 3, can have, as a pinching tool 15 a pair of molds, not shown in the drawings, which are also shaped so as to form a narrowing 10 without, however, producing any waste 8. Also, in this case, the molds can e.g. comprise two converging active surfaces at an angle Y so as to produce, in use, a narrowing 10, thereby reducing the roll 3 to a connecting tab 12 between two adjacent dough lengths 11.

The disclosures in Italian Patent Application No. VR99A000107 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method of producing small dough rolls with tapering ends for obtaining baguettes starting from at least one roll or sheet of unbaked dough carried by at least one support and having a surface layer or skin, said method comprising sequential differentiated compression, at at least one roll separation region at a time to delimit at least one smaller roll by means of at least one pinching tool having an active surface directed towards, and acting against, said support thereby obtaining, in use, a desired compression distribution to cause the skin, in contact with said tool, of the or each roll or sheet and the skin of its respective smaller roll being formed gradually to get close, without tearing, to the skin in contact with its respective support, until said skin in contact with said tool is at least partly joined to said skin in contact with its respective support to be eventually cut away from one another.

2. The method according to claim 1, characterized in that it comprises a controlled mutual movement between the or each dough roll or sheet moving along a feed direction and its respective tool moving along a compression direction which extends transversely to said feed direction.

3. The method according to claim 1 or 2, characterized in that the or each roll or sheet of dough has its main dimension extending substantially along a longitudinal axis.

4. The method according to claim 3, characterized in that the or each roll or sheet of dough is arranged at a preset angle with respect to said feed direction.

5. The method according to any one of the preceding claims, characterized in that said differentiated compression performed in sequential steps on the or each roll or sheet is applied transversely to the respective longitudinal axis.

6. The method according to any one of the preceding claims, characterized in that at least one side the or each roll or sheet at the or each separation region is pinched to form a respective lateral narrowing.

7. The method according to any one of the preceding claims, characterized in that said differentiated compression performed in sequential steps comprises at least two operations, one of which delimits the or each roll or sheet, on at least one side thereof, by removing at least one portion of dough to form a lateral narrowing, whereas the other operation comprises separation of the adjacent loaves belonging to the same roll at the narrowest section of each narrowing.

8. The method according to any one of claims 1 to 5, characterized in that said differentiated compression performed in sequential steps is carried out on a transverse plane which is inclined with respect to the feed direction of the or each roll, so as to obtain at least one small roll with its ends tapered but not aligned with said longitudinal axis of its respective roll.

9. The method according to claim 8, characterized in that the or each small roll is subsequently compressed in a mold in order to shape its tapering ends and align them with said longitudinal axis of its respective roll.

10. The method according to any one of the preceding claims, characterized in that said roll is substantially circular in cross-section thereby obtaining a sequence of said loaves aligned along said longitudinal axis.

11. The method according to any one of claims 1 to 7, characterized in that the or each sheet has such a width as to make it possible to obtain a sequence of said loaves arranged side by side and transversely to said longitudinal axis of said sheet.

12. An apparatus for performing the method according to any one of the preceding claims, comprising at least one support (2) for at least one dough roll (3) or sheet (4) having a surface layer or skin and at least one pinching tool (15) which is designed to divide the or each roll (3) or sheet (4) into at least two smaller rolls (14) and having a working surface which is directed towards, and acts against, its respective support (2), characterized in that said working surface of each tool (15) is so shaped as to apply, in use, a differentiated compression in sequential steps on the or each roll (3), thereby moving gradually and with no tearing, any skin in contact with the or each tool (15) of the or each roll (3) or sheet (4) and the skin of its respective smaller roll (14) being formed towards the skin in contact with its respective support (2), until said skin in contact with the or each tool (15) is at least partly joined to said skin in contact with its respective support (2) to be eventually cut away from one another.

13. The apparatus according to claim 12, characterized in that it comprises actuation means for producing controlled relative movement between the or each pinching tool (15) and said support (2).

14. The apparatus according to claim 12 or 13, characterized in that the or each support (2) is slidably mounted to be able to move in a longitudinal feed direction (X), and the or each pinching tool (15) is subjected to a reciprocating motion in a compression direction transversely to said feed direction (X).

15. The apparatus according to claim 12, characterized in that said working surface of the or each pinching tool (15) comprises compression surfaces (24) designed to move mutually closer, without tearing, the skin of said roll (20) in contact with the or each tool (15) and the skin in contact with its respective support (2), and a cutting front (25) arranged to join said skin in contact with the or each tool (15) to said skin in contact with its respective support (2) and to cut them.

16. The apparatus according to claim 15, characterized in that said compression surfaces (24) comprise a substantially smooth surface facing towards the or each roll (3), extending along the entire extension of said working surface of the or each tool (15) and has an edge which is radiused to a side of the or each tool (15).

17. The apparatus according to claim 15 or 16, characterized in that said cutting front (25) extends along the entire longitudinal extension of said working surface of the or each tool (15) and is in relief with respect to said compression surface (24), thereby applying a pressure contributing first to compress and join the skin of the or each roll (3) in contact with said tool (15) to the skin in contact with its respective support (2) and then to their cutting.

18. The apparatus according to claim 17, characterized in that said front (25) is located at an edge of said working surface of said pinching tool (15) to separate each smaller roll (14) from waste dough (8).

19. The apparatus according to claim 17, characterized in that said front (25) is located in an intermediate position with respect to said working surface to separate two adjacent smaller rolls (14).

20. The apparatus according to any one of claims 12 to 19, characterized in that the or each pinching tool (15) has a straight portion which is mounted for rotation about an axis substantially perpendicular to said feed direction (X) of the or each roll (3) to be able to perform cuts with different inclinations with respect to the axis of the or each roll (3).

21. The apparatus according to claim 20, characterized in that it comprises, upstream of said straight portion of said pinching tool (15), a second pinching tool (30) which is designed to remove portions of dough located on opposite sides with respect to the longitudinal axis (x-x) of the or each roll (3) thereby forming a narrowing.

22. The apparatus according to claim 21, characterized in that said second pinching tool (30) comprises at least two portions which are angled and mutually opposite with respect to said longitudinal axis (x-x) of the or each roll (3) and have mutually opposite vertices.

23. The apparatus according to any one of claims 12 to 19, characterized in that the or each pinching tool (30) is S-shaped to obtain the or each smaller rolls (14) having tapering ends not aligned with the axis of their respective roll (3).

24. The apparatus according to claim 23, characterized in that it comprises a mold (59) which is mounted downstream of said pinching tool (30).

25. The apparatus according to claim 24, characterized in that said mold (59) comprises at least one pair of concave working surfaces arranged on opposite sides with respect to said longitudinal axis (x-x) of the or each roll (3) and movably mounted along an axis substantially perpendicular to said axis in order to perform symmetrical mutually approaching and getting away movements.

26. The apparatus according to claim 24 or 25, characterized in that said working surfaces have edges which match together and are internally shaped so as to align said tapering non-aligned ends of the or each smaller roll (14) obtained by means of said S-shaped tool (30) with said longitudinal axis of the or each rolls (3).
